# FASCICULE DE BREVET EUROPEEN

(11) **EP 1 152 819 B1**
(45) Date de publication et mention de la délivrance du brevet: **25.06.2003**
(21) Numéro de dépôt: 00900671.9
(22) Date de dépôt: 27.01.2000
(51) Int. Cl.: B01J 8/00, B01J 8/06, B65B 1/06, B65G 69/16

(54) **PROCEDE ET DISPOSITIF POUR FACILITER LE REMPLISSAGE DE TUBES VERTICAUX A L'AIDE D'UN MATERIAU PARTICULAIRE**
VERFAHREN UND VORRICHTUNG ZUM ERLEICHTERN DES BEFÜLLENS VERTIKALER ROHRE MIT HILFE EINES PARTIKELFÖRMIGEN MATERIALS
METHOD AND DEVICE FOR FACILITATING THE FILLING OF VERTICAL TUBES WITH THE AID OF A PARTICULATE MATERIAL

(30) Priorité: 28.01.1999 FR 9900945
(43) Date de publication de la demande: 14.11.2001
(73) Titulaire: TotalFinaElf France, 92800 Puteaux (FR)
(72) Inventeur: PATUREAUX, Thierry, F-76290 Fontaine la Mallet (FR)
(74) Mandataire: Jolly, Jean-Pierre
(86) Numéro de dépôt international: FR0000182
(87) Numéro de publication internationale: WO00044488

(56) Documents cités:
- EP-A- 0 548 999
- FR-A- 2 621 447
- FR-A- 2 762 590
- US-A- 3 562 998
- US-A- 3 608 751

## Description

La présente invention concerne un procédé et un dispositif destinés à faciliter le remplissage de tubes verticaux à l'aide d'un matériau particulaire, notamment le chargement de tubes d'un réacteur chimique avec des particules de catalyseur.

C'est à cette application de l'invention que l'on se référera plus particulièrement dans la suite de la présente description, mais il sera clair pour l'homme de l'art que l'invention n'est pas limitée à cette utilisation et qu'elle s'applique aussi bien au remplissage de n'importe quel autre type de tube, disposé verticalement, avec un matériau solide quelconque à l'état particulaire.

On sait que les tubes d'un réacteur chimique ont une longueur relativement importante, par exemple de l'ordre de 10 mètres, et un diamètre d'environ 10 centimètres.

Ils sont fréquemment remplis de particules d'un matériau présentant des propriétés catalytiques, qui se présentent souvent sous la forme de petits cylindres percés axialement, d'une longueur d'environ 12 à 16 mm et d'un diamètre de 9 à 16 mm.

Le remplissage des tubes de réacteur à l'aide de telles particules est une opération complexe, car le catalyseur présente une texture en général relativement friable et, en tombant d'une grande hauteur, les particules ont tendance à se briser en multiples morceaux, en produisant également une grande quantité de fines pulvérulentes, qui obstruent en partie le tube. La conséquence d'un tel chargement est la création d'une perte de charge, qui se traduit par une restriction à l'écoulement du fluide dans le tube, provoquant ainsi des perturbations physiques dans le tube du réacteur, qui peuvent être préjudiciables, par exemple, à la structure métallurgique de ce tube.

Pour remédier à ce sérieux inconvénient, il a été proposé de disposer pendant le chargement, à l'intérieur du tube à remplir, des obstacles qui s'opposent au libre passage des particules au cours de leur chute, réduisant ainsi leur vitesse, pour diminuer leur énergie cinétique et éviter qu'elles ne se brisent en arrivant au fond du tube.

C'est ainsi que, selon le brevet US N° 3 608 751, un câble sur lequel sont montées des lames inclinées est disposé verticalement à l'intérieur d'un tube à remplir de catalyseur, les lames ralentissant la chute des particules de catalyseur et le câble étant remonté dans le tube à mesure que celui-ci se remplit.

Plus récemment, la demande de brevet européen N° O 548 999 a proposé, de façon analogue, de suspendre verticalement un câble ou une chaîne dans un tube que l'on désire charger d'un matériau particulaire, ce câble ou cette chaîne supportant des amortisseurs constitués de brosses flexibles disposées transversalement, pour freiner la chute des particules sans briser celles-ci, le câble ou la chaîne étant comme précédemment retirés progressivement du tube par le haut de celui-ci, à mesure que le remplissage progresse. Les brosses flexibles sont constituées notamment de fibres en acier à ressort.

Ces techniques antérieures pour ralentir la chute des particules font donc appel à des moyens flexibles du type ressort, qui fléchissent sous le poids des particules, en réduisant ainsi leur vitesse de chute. Les dispositifs de ce type présentent l'inconvénient d'être compliqués à fabriquer, car il faut disposer et maintenir des ressorts autour d'un axe, et ils sont par conséquent coûteux à réaliser. De plus, tout en ne présentant pas le même taux d'amortissement sur toute la longueur du ressort, ils permettent le passage de certaines particules, surtout lorsque le débit de chargement est important, sans que ces particules rencontrent les moyens formant ressort, si ces deniers viennent d'être sollicités par une ou plusieurs autres particules et se sont écartés de la position qu'ils occupent normalement.

Un autre inconvénient des moyens flexibles du type des fibres en acier à ressort précédemment utilisés est le bris d'un élément du moyen flexible qui tombe au fond du tube, sans pouvoir être retiré de celui-ci jusqu'au prochain déchargement du tube, en créant ainsi une perte de charge inutile pouvant être préjudiciable au bon fonctionnement du réacteur.

La présente invention s'intéresse à des procédés et à des dispositifs de même type général, simples, efficaces et peu coûteux à réaliser, utilisés en vue de freiner la chute de particules, notamment de catalyseur, lors du remplissage d'un tube disposé verticalement, et elle vise à substituer aux systèmes d'amortissement de la technique antérieure des organes d'une plus grande souplesse, permettant d'éviter que même des particules d'une grande friabilité risquent de se briser en les rencontrant.

A cet effet, l'invention a pour premier objet un procédé pour faciliter le remplissage d'un tube vertical à l'aide d'un matériau solide à l'état particulaire, du type dans lequel les particules descendent par gravité dans le tube en rencontrant sur leur trajet des obstacles supportés par au moins un câble ou similaire suspendu verticalement dans le tube, ce procédé étant caractérisé en ce qu'au cours de leur chute dans le tube, les particules rencontrent au moins trois obstacles, qui sont au moins pour partie décalés latéralement par rapport à l'axe du tube, au moins deux de ces obstacles étant disposés dans le tube à des niveaux différents, la plus grande dimension des obstacles, perpendiculairement à l'axe du câble associé, étant comprise entre 0,25 et 0,75 fois le diamètre du tube et ces obstacles occupant au moins 80 % de la section transversale du tube, et en ce que, à mesure que le tube se remplit, le câble est remonté vers la partie supérieure du tube.

L'invention a également pour objet un dispositif pour faciliter le remplissage d'un tube vertical à l'aide d'un matériau solide à l'état particulaire, qui descend par gravité dans le tube, du type comprenant au moins un câble ou similaire suspendu verticalement dans le tube, ce dispositif étant caractérisé en ce qu'il comprend au moins trois obstacles, qui sont au moins pour partie décalés latéralement par rapport à l'axe du tube, au moins deux de ces obstacles étant disposés dans le tube à des niveaux différents, la plus grande dimension des obstacles, perpendiculairement à l'axe de leur support associé, étant comprise entre 0,25 et 0,75 fois le diamètre du tube, ces occupant au moins 80 % de la section transversale du tube, et un moyen de levage du câble apte à le remonter vers la partie supérieure du tube à mesure que celui-ci se remplit.

Pour obtenir une meilleure répartition des obstacles dans l'espace constitué par le volume intérieur du tube, les câbles sont avantageusement disposés dans le tube de façon sensiblement symétrique par rapport à l'axe de ce tube.

De préférence, on utilise plus de deux câbles supportant les obstacles dans le tube et on choisit, pour constituer les obstacles associés, un matériau souple présentant le meilleur taux d'amortissement possible, de manière à offrir, d'une part, une plus grande probabilité de rencontre avec les particules à charger, quel que soit leur débit, et d'autre part, à obtenir un chargement homogène suivant toute la section, sans grains de catalyseurs cassés et sans fines de ces catalyseurs préjudiciables à la circulation du fluide.

Chaque câble est de préférence relié par au moins une entretoise souple à un autre câble, de manière que les différents câbles se répartissent correctement dans le tube, sans intervention des opérateurs.

Les obstacles supportés par certains câbles peuvent être en contact avec la portion contiguë de la paroi du tube ou au voisinage immédiat de celle-ci.

Avantageusement, les obstacles supportés par chaque câble sont disposés à des niveaux décalés régulièrement par rapport aux obstacles associés aux autres câbles, de manière à être disposés en quinconce les uns par rapport aux autres.

Comme indiqué ci-dessus, la plus grande dimension de ces obstacles, perpendiculairement au câble associé, pourra être comprise entre 0,25 et 0,75 fois le diamètre du tube, de manière qu'en tombant à l'intérieur du tube, les particules du matériau dont on désire remplir ce tube rencontrent nécessairement au moins un obstacle, qui amortira leur chute. Bien entendu, plus le diamètre des obstacles est petit, plus le nombre des câbles supportant ces obstacles est important.

Dans la pratique, chaque particule rencontrera plusieurs obstacles, qui la freineront successivement, sans lui imposer de choc notable, du fait de la nature de ces obstacles, et les particules seront ainsi ralenties efficacement au cours de leur trajet vers le bas du tube.

Dans le même but, comme indiqué ci-dessus, les obstacles disposés dans le tube occuperont au total au moins 80 % de la section transversale de ce tube.

Les obstacles présentent de préférence une symétrie de révolution autour d'un axe et ils peuvent avoir, par exemple, une forme sphérique, hémisphérique, conique ou tronconique, ou encore une forme cylindrique. Leur axe de symétrie peut avantageusement être confondu avec le câble qui les supporte.

Ces obstacles peuvent avantageusement être en un élastomère, notamment en caoutchouc de type butyl isobutylène, présentant un facteur d'amortissement, à température ambiante et sous une fréquence de 31 Hz, supérieur à 0,15 et de préférence à 0,20, ou encore en un matériau alvéolaire. Pour la mesure de ce facteur d'amortissement, on pourra se reporter à l'ouvrage "Criteria for Engineering Design", édité par C. Hepburn et R.J.W. Reynolds, Collection Applied Science Publishers, Ltd, Londres, et, plus particulièrement à l'article 2.4, de la page 25 de cet ouvrage : "Design of Elastomers for Sampling Applications".

A mesure que le tube se remplit, les différents câbles sont de préférence remontés vers la partie supérieure du tube sensiblement en synchronisation, de manière que les obstacles qu'ils supportent conservent les mêmes positions relatives.

L'invention permet donc d'obtenir un chargement homogène des particules dans le tube, en minimisant le bris des particules, et la formation de fines de catalyseurs dans le tube chargé.

Dans une variante de réalisation de l'invention, les câbles peuvent être constitués par des éléments distincts reliés latéralement entre eux par des entretoises, les câbles ou les entretoises étant assemblés les uns aux autres par des moyens de liaison connus en soi, par exemple à l'aide de mousquetons.

Suivant une autre variante de l'invention, les obstacles ont des axes de symétrie décalés par rapport à l'axe du câble qui les supporte, en direction de la paroi contiguë, en particulier lorsque le tube à remplir présente un diamètre d'entrée plus petit que le diamètre interne du tube.

D'autres caractéristiques et avantages de l'invention apparaîtront dans la description détaillée qui va suivre des différentes formes de mise en oeuvre de celle-ci. Dans cette description, on se référera aux dessins schématiques annexés, sur lesquels :
La figure 1 est une vue schématique en élévation d'un tube vertical équipé du dispositif conforme à l'invention ;
La figure 2 est une vue de dessus du tube ;
La figure 3 est une vue de dessus du tube, avec des obstacles de plus petit diamètre ;
Les figures 4, 5 et 6, sont des vues schématiques illustrant divers types d'obstacles utilisables dans le cadre de l'invention ;
Les figures 7 et 8 sont des vues schématiques illustrant deux variantes de mise en oeuvre de l'invention.

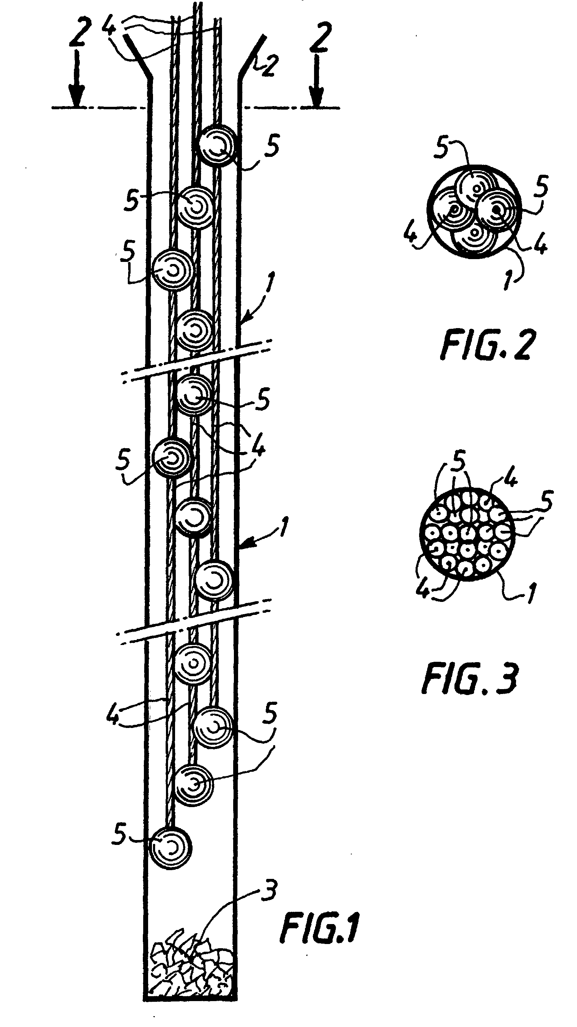

On se référera d'abord aux figures 1 et 2.

Le tube 1 représenté est un tube cylindrique vertical de grande longueur, par exemple un tube de réacteur chimique, et il est équipé à sa partie supérieure d'une trémie 2, dans laquelle sont déversées les particules 3 d'un matériau dont on désire remplir ce tube, d'un catalyseur par exemple.

Ces particules tombent par gravité vers le fond du tube 1 et l'invention vise à éviter que ces particules se brisent au cours de leur chute, en produisant des poussières indésirables.

Dans ce but, conformément à l'invention, une pluralité de câbles 4, par exemple en acier, au nombre de quatre dans le cas des dessins, sont suspendus verticalement à l'intérieur du tube 1, au voisinage de la paroi interne de celui-ci, chaque câble supportant des obstacles 5, ici en forme de boules, en un matériau souple apte à amortir les chocs des particules, par exemple en un élastomère ou en une mousse de matière plastique.

Dans la forme de réalisation représentée sur les figures 1 et 2, les obstacles 5 sont en contact avec la partie contiguë de la paroi interne du tube 1 et les obstacles des différents câbles sont décalés régulièrement les uns par rapport aux autres, de manière à être disposés en quinconce.

Les obstacles 5 ont ici un axe de révolution confondu avec l'axe du câble 4 associé et ils peuvent être sphériques ou non.

Leur plus grand diamètre, perpendiculairement au câble associé, est compris entre 0,25 et 0,75 fois le diamètre du tube 1, de manière qu'une particule du matériau à charger dans le tube rencontre nécessairement au moins l'un des obstacles 5 en tombant dans le tube et soit ainsi freinée dans sa chute, sans se briser pour autant, du fait de la nature de ces obstacles.

Dans la pratique, les obstacles supportés par chaque câble sont espacés les uns des autres d'environ 50 cm, de sorte que, pour un tube de grande longueur, chaque câble supporte de nombreux obstacles, en multipliant ainsi, pour les particules de matériau de remplissage, les opportunités de les rencontrer, dans leur trajet du haut vers le bas à l'intérieur du tube, ce qui freine ainsi de façon très efficace leur chute dans le tube.

Dans le même but, les obstacles disposés dans le tube occuperont au total au moins 80% de la section transversale du tube (voir figure 2), ce résultat pouvant également être obtenu avec une pluralité d'obstacles de diamètre plus petit (voir figure 3, où les organes décrits ci-dessus sont désignés par les mêmes chiffres de référence).

Des moyens usuels, non représentés, sont prévus pour remonter les différents câbles 4 en synchronisation vers le haut du tube 1, à mesure que le remplissage de celui-ci s'effectue.

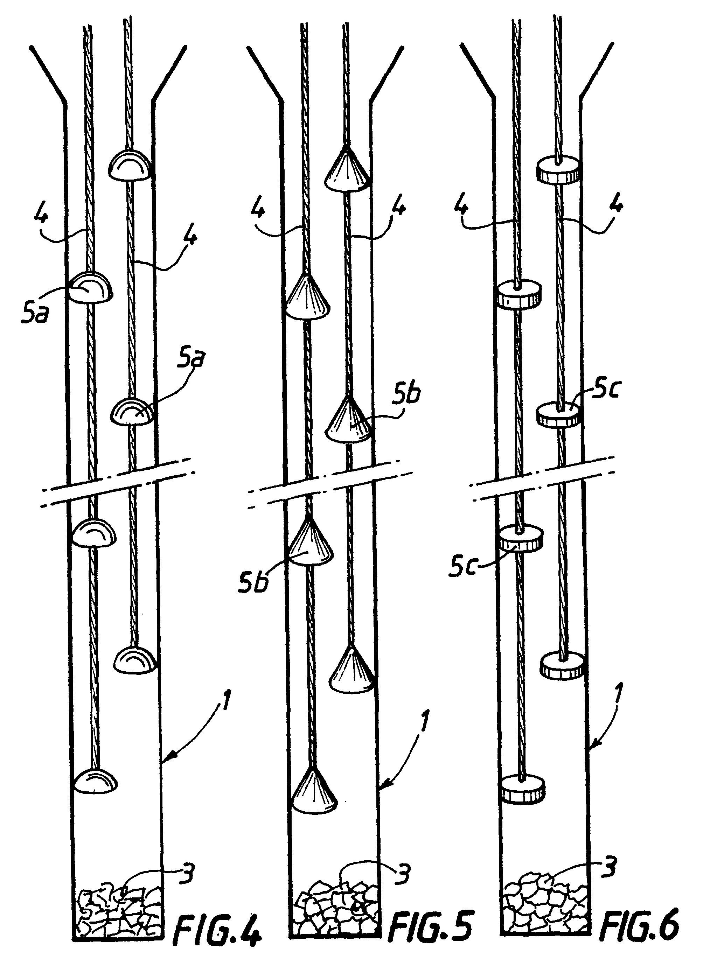

Dans le cas de la figure 1, les obstacles 5 ont une forme sensiblement sphérique, mais on peut utiliser toute autre forme d'obstacle présentant une symétrie de révolution autour d'un axe, par exemple des obstacles 5a de forme hémisphérique (Figure 4), 5b de forme conique (Figure 5) ou 5c de forme cylindrique (Figure 6), cette liste n'étant naturellement pas limitative.

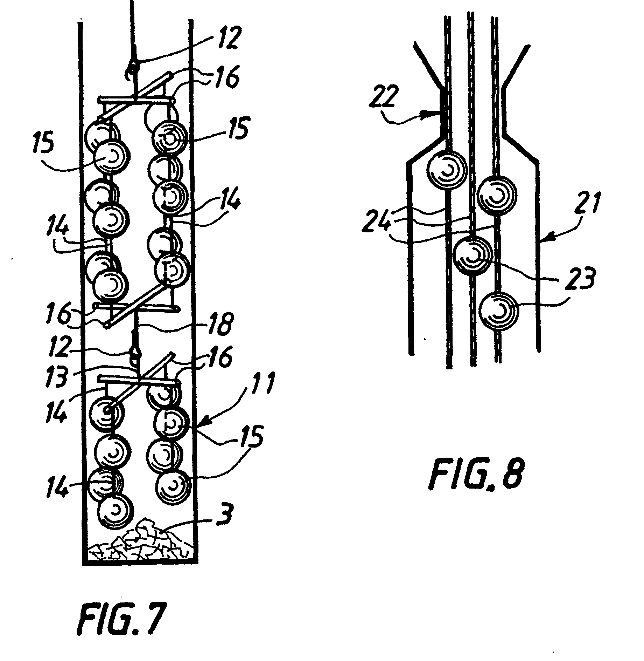

Sur la figure 7 est représentée une forme de réalisation de l'invention dans laquelle les obstacles 15, ici de forme sphérique, disposés à l'intérieur du tube 11, sont supportés par des câbles constitués d'une succession d'éléments distincts 14, reliés entre eux transversalement, à leur extrémité supérieure et à leur extrémité inférieure, par des entretoises 16, de préférence souples. Les ensembles successifs de câbles et d'entretoises sont réunis par des moyens d'assemblage connus dans la technique, par exemple, comme représenté, par des portions de câbles 18 et 13, accrochés entre eux par des systèmes de mousquetons 12.

Il n'est pas nécessaire que les obstacles portés par les câbles aient un axe de symétrie qui coïncide avec l'axe du câble. Dans le cas, en particulier, où le tube 21 comporte à sa partie supérieure une entrée 22 de diamètre interne inférieur à celui du tube, comme représenté sur la figure 8, il peut être avantageux que les obstacles 23, portés par les câbles 24 les plus proches de la paroi interne du tube 21, aient leur axe de symétrie décalé en direction de cette paroi, par rapport à l'axe du câble associé.

L'exemple de mise en oeuvre de l'invention qui va suivre illustre les avantages du dispositif conforme à l'invention pour le chargement d'un tube de réacteur.

### Exemple

On charge successivement, à l'aide de trois moyens différents, dont l'un conforme à l'invention, un tube de réacteur, avec un catalyseur en forme de particules cylindriques percées d'un trou suivant leur axe, dont les caractéristiques physiques sont indiquées ci-dessous :
- diamètre extérieur : 16 mm,
- longueur : 18 mm,
- diamètre intérieur : 6 mm.

Le tube de réacteur utilisé pour l'essai mesure sensiblement 7 mètres de long et son diamètre est de 100 mm. Ce diamètre est constant sur toute la hauteur du tube.

Trois moyens différents de chargement du catalyseur sont successivement utilisés dans cet essai :
- par effet de pluie, de façon connue en soi, pour obtenir un chargement le plus homogène possible, le catalyseur étant versé délicatement à partir de l'extrémité supérieure du tube ;
- avec un système d'amortissement de la chute des particules constitué de lamelles métalliques souples disposées régulièrement autour d'un câble disposé suivant l'axe du tube, ces lamelles étant régulièrement réparties dans l'espace intérieur du tube et disposées environ tous les 50 cm sur le câble suivant toute la hauteur du tube ;
- avec le dispositif conforme à l'invention constitué de 4 câbles supportant chacun 9 obstacles en forme de balles d'un diamètre de 40 mm, réalisées en un matériau du type butyl iso butylène ; les câbles mesurent 7,20 m et sont reliés les uns aux autres par des entretoises souples disposées environ tous les 1 m ; les obstacles sont répartis régulièrement sur la hauteur du tube et sont décalés d'un câble par rapport à l'autre, de manière à être disposés en quinconce dans le tube.

Après chaque chargement, la densité du chargement et le pourcentage de fines de catalyseurs ont été mesurés. Les résultats obtenus sont rassemblés dans le Tableau suivant.

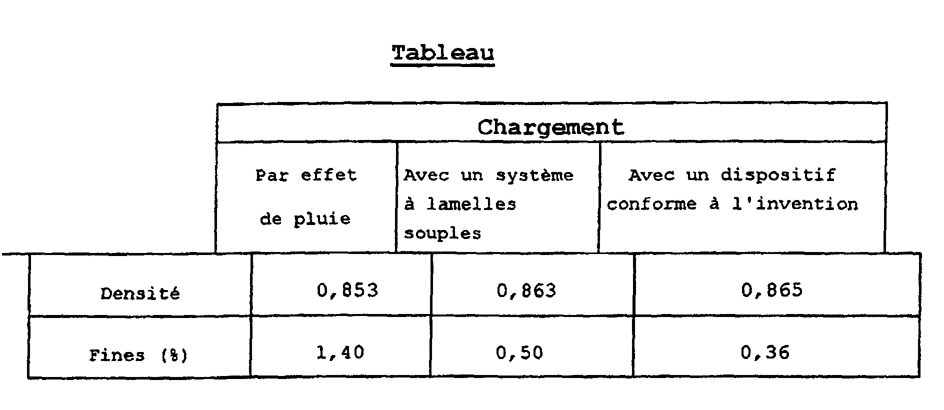

On voit, sur le Tableau, que la densité du chargement obtenue avec le dispositif conforme à l'invention est sensiblement identique à celle obtenue avec le système utilisant des lamelles souples disposées régulièrement autour d'un câble axial, tandis que la quantité de fines formées (ce qui englobe également les éventuelles brisures de grains de catalyseurs) est environ 1,5 fois plus faible que celle obtenue avec le système de chargement à lamelles.

Le dispositif conforme à l'invention permet, par ailleurs, d'obtenir des qualités de chargement supérieures à la méthode qui consiste à charger le catalyseur en vrac à partir de l'extrémité supérieure du tube, avec une densité de chargement améliorée et une quantité de fines formées au cours de ce chargement environ 3 à 4 fois inférieure à celle résultant d'un chargement en vrac.

## Revendications

1. Procédé pour faciliter le remplissage d'un tube vertical (1) à l'aide d'un matériau solide à l'état particulaire, du type dans lequel les particules descendent par gravité dans le tube (1) en rencontrant sur leur trajet des obstacles (5) supportés par au moins un câble ou similaire suspendu verticalement dans le tube, ce procédé étant **caractérisé en ce qu'**au cours de leur chute dans le tube, les particules rencontrent au moins trois obstacles (5), qui sont au moins pour partie décalés latéralement par rapport à l'axe du tube, au moins deux de ces obstacles (5) étant disposés dans le tube à des niveaux différents, la plus grande dimension des obstacles (5), perpendiculairement à l'axe du câble associé, étant comprise entre 0,25 et 0,75 fois le diamètre du tube (1)et ces obstacles (5) occupant au moins 80 % de la section transversale du tube (1) et **en ce que**, à mesure que le tube (1) se remplit, le câble (4) est remonté vers la partie supérieure du tube.

2. Procédé selon la revendication 1, **caractérisé en ce que** les obstacles (5) sont en un matériau souple, apte à amortir le choc des particules, qui présente un facteur d'amortissement supérieur à 0,15 et de préférence supérieur à 0,2, à la température ambiante et sous une fréquence de 31 Hz.

3. Procédé selon l'une des revendications 1 et 2, **caractérisé en ce que**, à mesure que le tube (1) se remplit, les câbles (4) sont remontés sensiblement en synchronisation vers la partie supérieure du tube (1).

4. Dispositif pour faciliter le remplissage d'un tube vertical (1) à l'aide d'un matériau solide à l'état particulaire, qui descend par gravité dans le tube (1), du type comprenant au moins un câble ou similaire suspendu verticalement dans le tube, ce dispositif étant **caractérisé en ce qu'**il comprend au moins trois obstacles (5), qui sont au moins pour partie décalés latéralement par rapport à l'axe du tube, au moins deux de ces obstacles (5) étant disposés dans le tube à des niveaux différents, la plus grande dimension des obstacles (5), perpendiculairement à l'axe de leur support associé, étant comprise entre 0,25 et 0,75 fois le diamètre du tube (1), ces obstacles (5) occupant au moins 80 % de la section transversale du tube, et un moyen de levage du câble (4) apte à le remonter vers la partie supérieure du tube (1) à mesure que celui-ci se remplit.

5. Dispositif selon la revendication 4, **caractérisé en ce que** au moins deux câbles (14) sont reliés par au moins une entretoise (16).

6. Dispositif selon l'une des revendications 4 et 5, **caractérisé en ce que** les obstacles (5) sont disposés sensiblement symétriquement par rapport à l'axe du tube.

7. Dispositif selon l'une des revendications 4 à 6, **caractérisé en ce que** certains au moins des obstacles (5) ont une symétrie de révolution et **en ce que** leur axe de symétrie est confondu avec l'axe de leur support associé.

8. Dispositif selon l'une des revendications 4 à 6, **caractérisé en ce que** certains au moins des obstacles (23) ont une symétrie de révolution et **en ce que** leur axe de symétrie est décalé par rapport au câble (4).

9. Dispositif selon l'une des revendications 7 et 8, **caractérisé en ce que** les obstacles (5) ont une forme sphérique, hémisphérique, conique, tronconique ou cylindrique.

10. Dispositif selon l'une des revendications 4 à 9, **caractérisé en ce que** les obstacles (5) sont en un matériau souple, présentant un facteur d'amortissement, à température ambiante et sous une fréquence de 31 Hz, supérieur à 0,15 et de préférence supérieur à 0,2.

11. Dispositif selon la revendication 10, **caractérisé en ce que** les obstacles (5) sont en un élastomère ou en un matériau alvéolaire.

12. Dispositif selon la revendication 11, **caractérisé en ce que** le matériau souple est un caoutchouc butyl isobutylène.

13. Dispositif selon l'une des revendications 13 et 14, **caractérisé en ce qu'**il comporte des moyens pour remonter sensiblement en synchronisation les différents câbles (4) vers la partie supérieure du tube (1), à mesure que celui-ci se remplit.

## Patentansprüche

1. Verfahren zum Erleichtern des Befüllens eines vertikalen Rohres (1) mit Hilfe eines festen, teilchenförmigen Materials, des Typs, bei dem die Teilchen aufgrund der Schwerkraft im Rohr (1) absinken, indem sie auf ihrer Bahn auf Hindernisse (5) treffen, die durch mindestens ein vertikal im Rohr aufgehängtes Kabel oder dergleichen getragen werden, **dadurch gekennzeichnet, dass** die Teilchen während ihres Falles durch das Rohr auf mindestens drei Hindernisse (5) auftreffen, die mindestens teilweise seitlich zu der Rohrachse versetzt sind, wobei mindestens zwei dieser Hindernisse (5) im Rohr auf verschiedenen Niveaus angeordnet sind, wobei die größte Abmessung der Hindernisse (5) senkrecht zur Achse des zugeordneten Kabels zwischen dem 0,25- bis 0,75-fachen des Durchmessers des Rohres (1) liegt und diese Hindernisse (5) mindestens 80% des Querschnittes des Rohrs (1) einnehmen, und dass in dem Maße, wie sich das Rohr (1) füllt, das Kabel (4) über den oberen Teil des Rohres angehoben wird.

2. Verfahren nach Anspruch 1, **dadurch gekennzeichnet, dass** die Hindernisse (5) aus einem geschmeidigen Material sind, das geeignet ist, den Stoß der Teilchen zu dämpfen, und das bei der Umgebungstemperatur und bei einer Frequenz von 31 Hz einen Dämpfungsfaktor von mehr als 0,15, vorzugsweise von mehr als 0,2, hat.

3. Verfahren nach einem der Ansprüche 1 und 2, **dadurch gekennzeichnet, dass** in dem Maße, wie sich das Rohr (1) füllt, die Kabel (4) im wesentlichen synchron über den oberen Teil des Rohres (1) angehoben werden.

4. Vorrichtung zum Erleichtern des Befüllens eines vertikalen Rohres (1) mit Hilfe eines festen, teilchenförmigem Materials, das durch Schwerkraft im Rohr (1) absinkt, des Typs, der mindestens ein vertikal im Rohr aufgehängtes Kabel oder dergleichen aufweist, **dadurch gekennzeichnet, dass** die Vorrichtung mindestens drei Hindernisse (5), die mindestens teilweise seitlich zu der Rohrachse versetzt sind, wobei mindestens zwei dieser Hindernisse (5) im Rohr auf verschiedenen Niveaus angeordnet sind, wobei die größte Abmessung der Hindernisse (5) senkrecht zur Achse der zugeordneten Halterung zwischen dem 0,25- bis 0,75-fachen des Durchmessers des Rohres (1) liegt und diese Hindernisse (5) mindestens 80% des Querschnittes des Rohres einnehmen; und eine Einrichtung zum Anheben des Kabels (4) enthält, durch die das Kabel, in dem Maße, wie sich das Rohr (1) füllt, über dessen oberen Teil angehoben werden kann.

5. Vorrichtung nach Anspruch 4, **dadurch gekennzeichnet, dass** mindestens zwei Kabel (14) mit Hilfe mindestens eines Querriegels (16) verbunden sind.

6. Verfahren nach einem der Ansprüche 4 und 5, **dadurch gekennzeichnet, dass** die Hindernisse (5) im wesentlichen symmetrisch zur Rohrachse angeordnet sind.

7. Vorrichtung nach einem der Ansprüche 4 bis 6, **dadurch gekennzeichnet, dass** zumindest gewisse Hindernisse (5) eine Rotationssymmetrie aufweisen und dass ihre Symmetrieachse mit der Achse der zugeordneten Halterung zusammenfällt.

8. Vorrichtung nach einem der Ansprüche 4 bis 6, **dadurch gekennzeichnet, dass** zumindest gewisse Hindernisse (23) eine Rotationssymmetrie aufweisen und dass ihre Symmetrieachse gegenüber dem Kabel (4) versetzt ist.

9. Vorrichtung nach einem der Ansprüche 7 und 8, **dadurch gekennzeichnet, dass** die Hindernisse (5) eine sphärische, halbkugelige, konische, kegelstumpfförmige oder zylindrische Form haben.

10. Vorrichtung nach einem der Ansprüche 4 bis 9, **dadurch gekennzeichnet, dass** die Hindernisse aus einem geschmeidigen Material sind, das bei der Umgebungstemperatur und bei einer Frequenz von 31 Hz einen Dämpfungsfaktor von mehr als 0,15, vorzugsweise von mehr als 0,2, hat.

11. Vorrichtung nach Anspruch 10, **dadurch gekennzeichnet, dass** die Hindernisse (5) aus einem Elastomer oder aus einem Schaumstoff (matériau alvéolaire) sind.

12. Vorrichtung nach Anspruch 11, **dadurch gekennzeichnet, dass** das geschmeidige Material einen Butyl-Isobutylen-Kautschuk darstellt.

13. Vorrichtung nach einem der Ansprüche 13 und 14, **dadurch gekennzeichnet, dass** sie eine Einrichtung zur im wesentlichen synchronen Anhebung der verschiedenen Kabel (4) über den oberen Teil des Rohres (1), in dem Maße, wie sich dieses füllt, aufweist.

## Claims

1. A process for facilitating filling of a vertical. tube (1) with a solid material in the particulate state, of the type in which the particles descend by gravity in the tube (1) meeting on their journey obstacles (5) supported by at least one cable or the like suspended vertically in the tube, this process being **characterised in that**, during their fall in the tube, the particles encounter at least three obstacles (5), which are at least partly offset laterally relative to the axis of the tube, at least two of these obstacles (5) being disposed in the tube at different levels, the largest dimension of the obstacles (5), perpendicularly to the axis of the associated cable, being between 0.25 and 0.75 times the diameter of the tube (1) and these obstacles (5) occupying at least 80% of the cross-section of the tube (1) and **in that**, as the tube (1) fills up, the cable (4) is raised towards the upper part of the tube.

2. A process according to claim 1, **characterised in that** the obstacles (5) are of a flexible material, capable of damping the impact of the particles, which exhibits a damping ratio greater than 0.15 and preferably greater than 0.2, at ambient temperature and at a frequency of 31 Hz.

3. A process according to one of claims 1 and 2, **characterised in that**, as the tube (1) fills up, the cables (4) are raised in substantially synchronised manner towards the upper part of the tube (1).

4. A device for facilitating filling of a vertical tube (1) with a solid material in the particulate state, which descends by gravity in the tube (1), of the type comprising at least one cable or the like suspended vertically in the tube, said device being **characterised in that** it comprises at least three obstacles (5), which are at least partly offset laterally relative to the axis of the tube, at least two of these obstacles (5) being disposed in the tube at different levels, the largest dimension of the obstacles (5), perpendicularly to the axis of their associated support, being between 0.25 and 0.75 times the diameter of the tube (1), these obstacles (5) occupying at least 80% of the cross-section of the tube (1), and a means for lifting the cable (4) capable of raising it towards the upper part of the tube (1) as the latter fills up.

5. A device according to claim 4, **characterised in that** at least two cables (14) are connected by at least one crossbar (16).

6. A device according to one of claims 4 and 5, **characterised in that** the obstacles (5) are disposed substantially symmetrically relative to the axis of the tube.

7. A device according to one of claims 4 to 6, **characterised in that** some at least of the obstacles (5) are rotationally symmetrical and **in that** their axes of symmetry coincide with the axes of their associated supports.

8. A device according to one of claims 4 to 6, **characterised in that** some at least of the obstacles (23) are rotationally symmetrical and **in that** their axes of symmetry are offset relative to the cable (4).

9. A device according to one of claims 7 and 8, **characterised in that** the obstacles (5) are spherical, hemispherical, conical, frustoconical or cylindrical in shape.

10. A device according to one of claims 4 to 9, **characterised in that** the obstacles (5) are made of a flexible material, having a damping ratio, at ambient temperature and at a frequency of 31 Hz, greater than 0.15 and preferably greater than 0.2.

11. A device according to claim 10, **characterised in that** the obstacles (5) are made of an elastomer or a cellular material.

12. A device according to claim 11, **characterised in that** the flexible material is an isobutylene butyl rubber.

13. A device according to one of claims 13 and 14, **characterised in that** it comprises means for raising the various cables (4) in substantially synchronised manner towards the upper part of the tube (1) as the latter fills up.
